# EUROPÄISCHE PATENTANMELDUNG

(11) **EP 1 162 123 A2**
(43) Veröffentlichungstag der Anmeldung: **12.12.2001**
(21) Anmeldenummer: 01113340.2
(22) Anmeldetag: 01.06.2001
(51) Int. Cl.: B62B 9/10

(54) **Schiebewagen für Kinder und/oder Puppen**

(30) Priorität: 23.09.2000 DE 10047226; 22.07.2000 DE 10035821; 09.06.2000 DE 20010213 U
(71) Anmelder: Beger, Udo, 84030 Ergolding (DE)
(72) Erfinder: Beger, Udo, 84030 Ergolding (DE)
(74) Vertreter: Eichstädt, Alfred, Dipl.-Ing.

(57) **Zusammenfassung**

Bei einem Schiebewagen für Kinder und/oder Puppen, mit einem Wagengestell (1), einem Sitz- oder Liegeelement, mindestens einem Schieber mit einem Schiebegriff oder einem Schiebebügel (3), Lager (8) für hintere seitliche Räder und mindestens ein Lager für mindestens ein vorderes Rad (10), ist zur Kippsicherung an einem Teil des Wagengestells mindestens eine sich schräg nach hinten und unten erstreckende, die Achsen der hinteren Räder (9) rückseitig überstehende Stütze (22) angelenkt ist, die gegen die Kraft einer Feder (29) in Fahrtrichtung nach vorn in Richtung der Achsen der hinteren Räder verschwenkbar ist und bei Nichtausübung einer Schwenkkraft in die Aufstellposition zurückschwenkt und in einem bestimmten Abstand über den Boden endet.

## Beschreibung

Die Erfindung betrifft einen Schiebewagen für Kinder und/oder Puppen mit einem Wagengestell mit den im Oberbegriff des Anspruchs 1 angegebenen Merkmalen.

Gattungsgemäße Schiebewagen als dreirädrige Schiebewagen sind beispielsweise aus der DE 299 03 241 sowie aus der US-5,765,855 bekannt. Vierrädrige Ausführungen sind z. B. in der DE 297 06 809 U1, der US-5,772,279 und der US-5,676,386 dargestellt und beschrieben. Bei allen bekannten Schiebewagen der gattungsgemäßen Art ist das Sitzelement so vor die Achse der Hinterräder gelegt, daß der Schwerpunkt sich stets vor der Hinterräderachse befindet, auch wenn größere Kinder darin sitzen. Es ist ersichtlich, daß bei solchen Ausführungen, bei denen der Schwerpunkt des Schiebewagens mit dem darin sitzenden Kind weit von der Hinterachse nach vorn verlagert ist, es teilweise beschwerlich ist, den Schiebewagen von einer Straße über eine Bordsteinkante auf den Bürgersteig anzuheben. Hierzu muß ein bestimmter erhöhter Druck über den Schiebebügel auf die Hinterachse ausgeübt werden. Durch das so entstehende Drehmoment wird der vordere Teil des Schiebewagens angehoben, so daß das Vorderrad auf den erhöhten Bürgersteig aufgeschoben werden kann.

Es ist ersichtlich, daß insbesondere beim Auffahren auf eine Bordsteinkante durch den erhöhten Druck, der auf den Schieber bzw. den Schiebebügel des Schiebewagens ausgeübt werden muß, um das oder die Vorderräder anzuheben, die Gefahr besteht, daß der Schiebewagen hochkippt und ein darin sitzendes Kind oder auch ein in einem Liegeaufsatz liegendes Kind aus dem Sitz bzw. dem Liegeaufsatz fallen kann, bzw. sich zumindest darin so weit lagemäßig verschieben kann, daß ein kritischer, nicht kontrollierbarer Zustand für die den Schiebewagen schiebende Person eintreten kann.

Vielfach werden von einer Mutter auch zwei Kleinkinder gleichzeitig zum Einkaufen oder Spazierengehen mitgeführt. Das Kind, das laufen kann, ermüdet und wünscht dann, wie der Bruder oder die Schwester, ebenfalls sitzend gefahren zu werden. Es besteht deshalb das Bedürfnis, im Bedarfsfall den einsitzigen Schiebewagen als zweisitzigen Schiebewagen auszubilden.

Ein solcher Schiebewagen ist aus der US 2,857,953 bekannt. Dieser Schiebewagen weist einen bügelförmigen Tragrahmen mit zwei Schenkeln auf, die mit den freien Enden an dem Wagengestell angelenkt sind. Der Tragrahmen lässt sich nach hinten über die hintere Achse der hinteren Räder verschwenken und weist Aufnahmen für einen Sitzteil auf. Der Tragrahmen ist in dieser Schrägstellung mittels einer Strebe an den Schiebebügel des Kinderwagens befestigt.

Es ist ersichtlich, dass der Schwerpunkt des Wagens durch das in diesem Sitz sitzende Kind von vorne nach hinten verschoben wird, so dass schon ein leichter Druck auf den Schiebebügel ausreichend ist, um den Schiebewagen vorne aufkippen zu lassen. Um dies zu vermeiden, ist eine Stütze an dem Bügel befestigt, die sich nach unten erstreckt und vorschwenkbar ist, wenn sie nicht mehr benötigt wird. Mittels Spannschrauben ist ein fester Sitz am Bügel des Rahmens gewährleistet. Sitzt ein Kleinkind im hinteren Sitz, so wird die Stütze in eine senkrechte Position verschwenkt und am Bügel festgeschraubt. Wenn nun Druck auf den Schiebebügel ausgeübt wird, kann zwar ein leichtes Ankippen gegeben sein. Die Stütze, die über den Boden endet, setzt jedoch auf diesen auf und verhindert ein Aufkippen.

Ein Kinderwagen mit zwei hintereinander angeordneten Sitzen, ohne Sicherungsstütze, ist aus der DE 73 44 153.9 U bekannt. Der zweite Sitz verschiebt dabei den Schwerpunkt des Kinderwagens ebenfalls in den Bereich der Achse der hinteren Räder, so dass ein leichteres Aufkippen gegeben ist.

Ein Kinderwagen mit einem nachlaufenden Stehbrett, was hochklappbar ausgebildet ist und hinten ein Rad besitzt, ist aus der WO 99/16653 bekannt.

Aus der DE 299 16 012 U ist weiterhin ein Kinder- oder Sportwagen bekannt, bei dem hinter den hinteren Rädern verlaufend eine, an einem Querholm des Schiebebügels des Kinderwagens befestigbare Doppelstütze vorgesehen ist mit einem daran rückseitig befestigten Kindersitz. Die Doppelstütze ist verschwenkbar um einen oberen Drehpunkt angeordnet und mittels Verbindungsstreben fest an der hinteren Achse der Räder befestigt. Dies senkrechte Doppelstütze weist am unteren Ende ein bzw. zwei seitliche Räder auf und steht auf dem Boden auf. Die Doppelstütze mit der Radanordnung verhindert dabei ebenfalls ein Aufkippen des Kinderwagens für den Fall, dass in dem Sitz ein Kleinkind sitzt oder eine erhöhte Druckkraft auf den Schiebebügel ausgeübt wird.

Die bekannten Ausführungen sind nicht geeignet, einen Bürgersteig über eine erhöhte Bordsteinkante leicht auffahren zu können. Im Falle der Rückwärtsbewegung muss der gesamte Kinderwagen angehoben werden, damit die hintern Räder und die Stützräder in Rückwärtsfahrtrichtung auf den Bürgersteig aufgestellt werden können. Erst dann kann durch Hochkippen des Wagens das Vorderrad nachgezogen werden. In umgekehrter Richtung ist ein Auffahren mit dem Vorderrad oder den Vorderrädern praktisch nicht möglich oder nur erschwert möglich, da ein Kippkraft erst auf die hinteren zusätzlichen Stützräder bzw. Stützen ausgeübt werden müsste.

Es besteht darüber hinaus das Bedürfnis, auch dann, wenn ein Ablagekorb unterhalb des Sitzelementes im Wagengestell vorgesehen ist, zusätzliche, insbesondere sperrigere Güter mitführen zu können, die beispielsweise eingekauft werden.

Ausgehend von den bekannten Schiebewagen liegt der vorliegenden Erfindung die Aufgabe zugrunde, die Kippsicherung des Schiebewagens zu verbessern, so daß ein unbeabsichtigtes Aufkippen nach hinten nicht möglich ist, gleichwohl aber ein gewohnt einfaches Befahren eines Bürgersteiges sichergestellt und ein höherer Nutzen gegeben ist.

Die Erfindung löst die Aufgabe durch Ausgestaltung des Schiebewagens durch die im Anspruch 1 angegeben Merkmale.

Gemäß der Lehre des Anspruch 1 ist bei jedem Schiebewagen der gattungsgemäßen Art zur Kippsicherung beim Einwirken einer senkrechten Kraftkomponente auf den Schiebegriff oder den Schiebebügel an einem Teil des Wagengestells mindestens eine, sich schräg nach hinten und unten erstreckende, die Achsen der hinteren Räder rückseitig überstehende Stütze angelenkt ist, die gegen die Kraft einer Feder in Fahrtrichtung nach vorn in Richtung der Achsen der hinteren Räder verschwenkbar ist und bei Nichtausübung einer Schwerkraft in die Aufstellposition zurückschwenkt und in einem bestimmten Abstand über den Boden endet.

Die angegebene Stütze, die auch als Stützenpaar beidseitig vorgesehen sein kann stellt dabei eine optimale Sicherung gegen Aufkippen sicher, gestattet aber durch die federbelastete Anlenkung, dass z. B. Beim Rückwärtsfahren gegen einen Bordsteinkante die Stütze automatisch in Richtung der hinteren Räder verschwenkt wird und somit ein ungehindertes Befahren einer Bordsteinkante mit den hinteren Rädern ermöglicht. Sobald die hinteren Räder wieder auf den Bürgersteig aufstehen, schnellt die Stütze bzw. die Stützen durch die Federkraft wieder in die Aufstellposition, so dass die gewünschte Sicherung gegeben ist. Umgekehrt kann beim Vorwärtsbefahren einer Bordsteinkante, die ein hinteres Aufkippen zwingend notwendig macht, durch einfaches Fußdruck gegen die Stütze diese nach vorne verschwenkt werden und der Kinderwagen um die hinteren Räder aufgekippt werden.

Vorteilhafte Weiterbildungen der Stützen sind in den Ansprüchen 2 bis 5 angegeben. An der Stütze oder den Stützen können selbstverständlich auch mitlaufende Räder vorgesehen sein, die ständig auf dem Boden aufstehen. Dabei ist die Schwenkbewegung der Stützen ebenfalls in gewünschter Weise sichergestellt. Sie richten sich durch die gespannte Feder auch wieder in die Aufstellposition automatisch auf. Soll dieses verhindert werden, beispielsweise beim Zusammenklappen des Schiebewagengestells, so ist in weiterer Ausgestaltung vorgesehen, dass die Stütze oder die Stützen in der eingeschwenkten Position arretiert werden können.

Soll eine Federwirkung auch nach hinten über den Aufstellpunkt hinaus ermöglicht werden, so kann eine zusätzliche entgegenwirkende Feder vorgesehen sein, die eine Auslenkung um ein bestimmtes geringes Maß nach hinten gegen diese Federkraft aus der Aufstellposition ermöglicht.

Besonders vorteilhaft ist die erfinderische Lösung einsetzbar in Verbindung mit einem Schiebewagen nach Anspruch 6.

Die darin angegebene Zusatzeinrichtung ist hinter der Achse der hinteren Räder vorgesehen. An dieser ist mindestens eine Stütze zusätzlich oder alternativ vorgesehen, so daß unbedenklich der Schiebewagen aufgekippt werden kann, ohne daß ein bestimmter Winkel beim Aufkippen des Wagens überschritten wird, wodurch das Kind aus dem Sitz oder Liegeaufsatz herausfallen könnte. Andererseits ist ein Wegschwenken gegen die Kraft einer Feder möglich, wenn dies erforderlich ist.

In den Ansprüchen 7 bis 14 sind die Sicherungseinrichtungen in Bezug auf solche Schiebewagen angegeben, die zusätzlich eine Zusatzeinrichtung aufweisen, wobei die Zusatzeinrichtung verschieden ausgebildet und auch verschiedenartig am Fahrgestell befestigt sein kann.

Vorteilhafte Ausgestaltungen der Funktionseinsätze sind in den Ansprüchen 15 bis 17 und Ausbildungen des Sitzeinsatzes in den Ansprüchen 18 und 19 angegeben.

Unter einer festen Verbindung versteht die Erfindung dabei, daß der Tragrahmen der Zusatzeinrichtung z. B. an den Stützstreben angeschweißt ist oder beispielsweise die Rahmenverlängerung eines Ablagekorbes bildet und an dem Rahmen des Ablagekorbes fest angekoppelt ist. Als feste Verbindung gelten aber auch Schraub- und Nietverbindungen jeglicher Art.

Unter lösbarer Verbindung versteht die Erfindung jene Verbindungsarten, die es ermöglichen, den Tragrahmen, beispielsweise durch Lösen einer Schraube oder eines Arretierungsmittels, von einem Befestigungshalter zu lösen und abnehmen zu können, so daß der Tragrahmen der Zusatzeinrichtung nur dann angesteckt oder anmontiert wird, wenn er tatsächlich gebraucht wird. Dadurch ist es möglich, bestehende Schiebewagen der gattungsgemäßen Art auch nachträglich mit einer Zusatzeinrichtung auszustatten. Hierfür ist gemäß Anspruch 20 vorgesehen, daß die Teile der Zusatzeinrichtung als Nachrüstsatz für Schiebewagen zusammengestellt und lieferbar sind. Unter Anwendung einer entsprechenden Anbauanleitung ist eine einfache Montage an einem bestehenden Schiebewagen der gattungsgemäßen Art möglich.

Unter verschwenkbarer Befestigung versteht die Erfindung alle schwenkbaren Anbringungen des Rahmens oder der Stütze oder den Stützen, um diesen bzw. diese aus einer ersten Klappstellung, z. B. der Verstaustellung, in eine zweite funktionsgemäße Stellung verbringen zu können. Die Schwenkgelenke können dabei fest an den Stützstreben oder an dem Querholm bzw. einer verbindenden starren Achse der hinteren Räder befestigt sein. Sie können auch an lösbaren Haltern vorgesehen sein. Beispielsweise können hierfür Aufklipphalter vorgesehen sein, die U-förmig ausgebildet sind und federnde Seitenwände aufweisen, die teilweise beim Aufklippen auf die profilangepaßten Holme des Schiebewagens bzw. der Streben selbsthemmend und hierin festklemmend aufsitzen.

Je nach Bauausführung ist eine feste, lösbare oder verschwenkbare Befestigung nicht nur an dem Wagengestell selbst möglich, sondern auch an dem Rahmenteil oder den Seitenwänden eines Ablagekorbes, der unterhalb des Sitzelementes des Schiebewagens angebracht ist. Auch hierzu sind Lösungen detailliert in den Unteransprüchen angegeben.

Im Falle der Verwendung von ausschwenkbaren Zusatzeinrichtungen, die nach hinten verschwenkbar sind, muß dafür Sorge getragen werden, daß der Schwenkwinkel begrenzt wird, um so eine gesicherte Position zu der Rückseite der Rückenlehne des Sitzelementes zwischen den Schrägholmen des Schiebewagens herzustellen. Diese Sicherung kann beispielsweise durch starre Verbindungselemente hergestellt werden, die zwischen den Rahmenschenkeln und einer Querstrebe oder den Stützstreben des Fahrgestells angebracht werden. Es ist aber auch möglich, beispielsweise ein Gurtband, vorzugsweise im Bereich des oberen Abschnitts des Tragrahmens an diesem einerseits und andererseits an den Stützstreben zu befestigen oder um diese herumzulegen und mittels Gurtschließelemente miteinander vor den Stützstreben zu verbinden. Diese Ausführung empfiehlt sich insbesondere dann, wenn die Zusatzeinrichtung als Nachrüstsatz geliefert wird, um unabhängig von der Bauausführung der Schiebewagen eine einfache Montage zu ermöglichen. Um ein Gurtsystem in der Höhe fixieren zu können, ist es erforderlich, entweder die Befestigungspunkte an dem Wagengestell zu fixieren oder aber Durchführungsösen ortsfest an den Stützstreben vorzusehen, um den Gurt hierdurch führen zu können, damit er nicht unbeabsichtigt nach unten gleiten und damit die Schrägstellung verändern kann.

Als Funktionseinsätze können an dem Tragrahmen verschiedene Einsätze angebracht werden. Dies kann beispielsweise auch ein Behältnis für sperrige Güter sein, die darin hochgestellt eingebracht werden können. Der Funktionseinsatz kann jedoch auch ein Sitzeinsatz sein, um beispielsweise ein zweites Kind im Bedarfsfall hineinsetzen zu können. Es ist ersichtlich - gleich ob es sich um Güter oder um ein Kind handelt - daß der Schwerpunkt des Schiebewagens automatisch durch das über die hintere Achse hinausragende Gewicht verlagert wird, und zwar zur Hinterachse hin. Dadurch ist ein leichteres Aufkippen des Vorderrades bei dreirädriger Ausführung, oder der Vorderräder bei vierrädriger Ausbildung möglich, um den Schiebewagen leichter auf einen Bürgersteig, der durch eine Bordsteinkante abgesetzt ist, auffahren zu können. Das zweite Kind ist zudem durch die Rückseite der Rückenlehne des ersten Sitzelementes geschützt.

Im Falle der Ausführung einer verschwenkbaren Zusatzeinrichtung kann diese nach Gebrauch in Richtung der Stützstreben verschwenkt werden, so daß die ursprüngliche Schwerpunktslage wieder eingenommen wird. Darüber hinaus stellt das Verschwenken sicher, daß bei einem zusammenklappbaren Fahrgestell die Zusatzeinrichtung mit angeklappt werden kann, ohne daß sie abgenommen werden muß.

Dem Fachmann sind mannigfaltige konstruktive Lösungen möglich, die durch die Detaillierungen in den Unteransprüchen mit erfaßt sind.

Durch die Aufhängung der Stütze oder der Stützen für die Kippsicherung und deren Bewegung gegen eine Federkraft ist auf einfache Weise immer sichergestellt, die Stütze funktionsgemäß aufgestellt ist, wenn sie aus einer Verstaustellung in eine Gebrauchsstellung gebracht wird, gleich ob die Stütze nun an dem Wagengestell oder an dem Rahmen der Zusatzeinrichtung angelenkt ist.

Die Erfindung wird nachfolgend anhand der in den Zeichnungen schematisch dargestellten Ausführungsbeispiele am Beispiel eines Schiebewagens mit Zusatzeinrichtung ergänzend erläutert.

In den Zeichnungen zeigen:
- FIG 1: einen Schiebewagen mit einem Fahrgestell mit einer Zusatzeinrichtung, die verschwenkbar an den Stützstreben angelenkt ist,
- FIG 2: eine Variante eines Schiebewagens mit einem Ablagekorb, an dessen Rahmen die Zusatzeinrichtung befestigt ist und
- FIG 3: eine Zusatzeinrichtung, die an den Stützstreben eines Wagengestells ortsfest befestigbar ist.

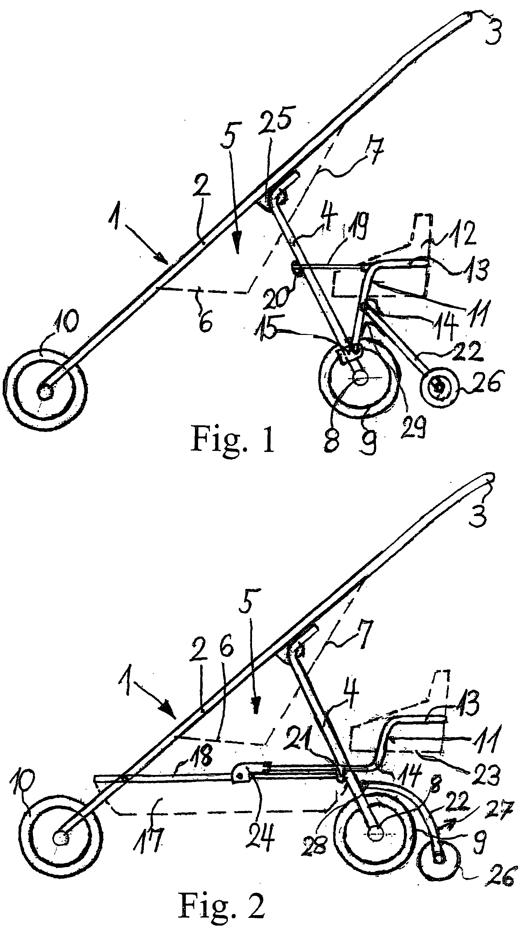

In FIG 1 sind in schematischer Darstellung die wesentlichen Elemente eines Wagengestells eines Schiebewagens der gattungsgemäßen Art dargestellt. Das Wagengestell 1 weist Schrägholme 2 auf, die im Ausführungsbeispiel ununterbrochen durchgehend ausgeführt sind. Sie können aber auch aus Abschnitten bestehen, die über Gelenke miteinander verbunden sind, um ein Zusammenlegen des Gesamtgestells zu ermöglichen. Die schematische Darstellung zeigt beispielsweise ein Wagengestell für einen dreirädrigen Schiebewagen. Das gleiche Konstruktionsprinzip ist aber auch auf einen vierrädrigen Schiebewagen unmittelbar übertragbar.

Die beiden Schrägholme 2 sind beabstandet zueinander angeordnet und verlaufen mindestens im Sitzelementenbereich des Sitzelementes 5 parallel bzw. nahezu parallel. In der Ausführung sei angenommen, daß ein Schiebebügel 3 die beiden Querholme 2 im oberen Bereich miteinander verbindet. Im unteren Bereich kann eine Gabel vorgesehen sein, die eine Achse zur Aufnahme eines vorderen Rades 10 aufweist. Das Sitzelement 5 ist gestrichelt dargestellt. Es weist einen Sitzteil 6 und eine Rückenlehne 7 auf. Bei dreirädrigen Ausführungen, aber auch bei vierrädrigen Schiebewagen, sind die beiden Teile aus Textilien hergestellt und mit Seitenwänden an den Schrägholmen 2 angekoppelt. Der Sitzteil 6 ist dabei als relativ starres Teil ausgebildet, kann aber auch durchhängend ausgeführt sein.

An Haltern 25 an den Schrägholmen 2 sind fest oder schwenkbeweglich, je nach Ausführungsart des Wagengestells, Stützstreben 4 befestigt, die sich nach unten erstrecken und an ihren Enden Lagervorrichtungen 8 aufweisen, an denen die seitlich vorgesehenen hinteren Räder 9 drehbar befestigt sind. Die Lagervorrichtungen 8 können aus einer durchgehenden Achse bestehen, die an den beiden Stützstreben 4 befestigt sind. Es sind hier aber auch andere konstruktive Ausgestaltungen möglich. Auch ist die Erfindung auf eine Gestellausführung anwendbar, bei der die Stützstreben 4 in Richtung der Schrägholme 2 verschwenkbar sind, um ein Zusammenklappen in eine Verstaustellung zu ermöglichen, aber auch bei solchen Ausführungen, bei denen das Gestell in Querrichtung allein oder zusätzlich zusammengeklappt werden kann, also die beiden seitlichen hinteren Räder 9 sich aufeinanderzu bewegen, um eine noch kleinere zusammengeklappte Verstaueinheit zu bilden.

An den Stützstreben 4 sind Befestigungseinrichtungen 15, nämlich aufklippbare Halter, vorgesehen, an denen Schwenklager, z. B. Aufnahmebolzen, vorgesehen sind, an denen die Seitenschenkel des Tragrahmens 11 der Zusatzeinrichtung mit Lagerbohrungen aufgesteckt sind. Die Bolzen können auch angenietet sein, so daß eine Nietverbindung zwischen den Befestigungseinrichtungen 15 und den Schenkeln des Tragrahmens 11 besteht. Es empfiehlt sich, die Befestigungseinrichtungen als Klipphalter auszubilden, also aus Seitenwänden, die in sich elastisch sind und z. B. die Stützstreben 4, die eine zylindrische Rohrform aufweisen, klemmend mindestens teilweise übergreifen und so durch die Klemmwirkung der Seitenwände hieran festsitzen, jedoch durch erhöhte Abzugskraft auch wieder lösbar sind.

Diese Befestigungseinrichtung 15 kann auch nachträglich angeklippt werden. Die Befestigungseinrichtung 15 kann unmittelbar oberhalb der Achse, die die Lagervorrichtung 8 bildet, angebracht sein, so daß ein Verschieben derselben-auch bei größerer Kraftaufwendung - nach unten nicht möglich ist. Der Rahmen 11 besteht aus einem oberen Abschnitt 13, der beim Verbringen in die dargestellte Gebrauchsstellung im wesentlichen parallel zum Aufstellboden des Wagengestells verläuft. Dem schließt sich ein nach unten gerichteter weiterer Abschnitt 14 an. Es handelt sich dabei um die beiden freien Schenkelenden, die nach unten verlaufen und an der Befestigungseinrichtung 15 angelenkt sind. Der Rahmen 11 kann also aus der dargestellten Position nach vorne verschwenkt werden und kommt so zur Anlage an oder zwischen den beiden Stützstreben 4; Dies entspricht der Verstauposition. Die dargestellte Position ist die Gebrauchsposition. Als Funktionseinsatz 12 ist ein Sitzeinsatz vorgesehen, der eine Sitzfläche 23 und Seitenwände sowie eine Rückwand aufweist. Der Funktionseinsatz 12 ist gestrichelt eingezeichnet. Er kann beispielsweise auch durch einen anderen Funktionseinsatz ersetzt werden. Bei der Nutzung als zweiten Sitz für ein Kleinkind oder bei der Ausbildung als Puppenwagen für eine zweite Puppe oder bei der Kombination Puppen-Kinderwagen ist ferner dafür Sorge zu tragen, daß der Schwenkweg nach hinten begrenzt wird. Hierzu sind im Ausführungsbeispiel Gurte 19 an den Abschnitten 13 befestigt. Diese Gurte werden durch Führungen 20, die ortsfest an den Stützstreben 4 vorgesehen sind, geführt und weisen an ihren Enden Schloßverbindungselemente auf, die bei gleichzeitiger Herstellung einer Querverbindung vor den beiden Stützstreben miteinander verbindbar sind und so den aufgestellten Tragrahmen 11 sichern.

Die Länge der Gurte A kann dabei veränderbar ausgebildet sein, um verschiedene Schräglagen des Rahmens einstellen zu können. Anstelle von Gurten 19 können aber auch andere sichernde Elemente vorgesehen sein, z. B. ein Kettenelement oder aber auch eine Verbindungsstange, die aushängbar an den Stützstreben 4 befestigt sein kann. Eine andere Ausbildung kann darin bestehen, daß die Befestigungseinrichtung 15 eine Wand aufweist, an der der untere Abschnitt der Schenkel 14 entlanggleitet und gegen einen Anschlag greift. Auch hier gibt es mannigfaltige konstruktive Ausführungsformen, die allesamt dazu dienen, den Schwenkweg des Tragrahmens 11 zu begrenzen.

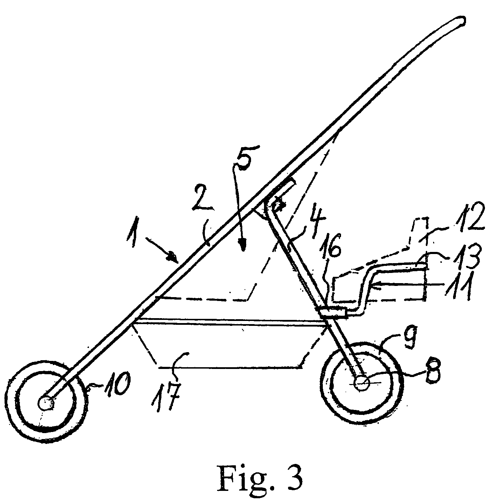

Aus FIG 1 ist ferner ersichtlich, daß seitliche Stützen 22 am Tragrahmen 11 angelenkt sind. Eine zwischen den Seitenholmen des Tragrahmens 11 und den Stützen zwischengefügte Feder 29 gestattet ein Verschwenken der Stützen in Richtung der Achse 8 der hinteren Räder 8 zugleich auch eine automatische Aufstellung. Diese Stützen 22 können beispielsweise bogenförmig oder geradlinig ausgeführt sein und endet oberhalb des Aufstellbodens in einem bestimmten Abstand, z. B. 7 cm. Durch diese Stütze ist sichergestellt, daß ein Aufkippen des Wagengestells bei erhöhtem Druck auf den Schiebebügel 3 nach unten praktisch nicht möglich ist. Es besteht also durch diese Stütze eine Sicherungsfunktion, um ein Aufkippen des Wagengestells 1 beim Anheben der Vorderräder im Sinne einer Drehung um die hintere Achse zu vermeiden bzw. den Aufkippweg zu begrenzen. Solche Stützen können selbstverständlich auch bei den weiteren Beispielen gemäß FIG 2 und FIG 3 vorgesehen sein, um eine zusätzliche Sicherheit zu gewährleisten.

An den Stützen 22 können auch Räder 26 angebracht sein, wie dies aus Figur 1 und 2 ersichtlich ist. Hierzu bieten sich verschiedene Lösungen an. Um beim Aufkippen keine Stoppfunktion zu erzielen, können die Räder mit ihren Rollflächen beabstandet zum Boden angeordnet sein, so daß beim Auffahren auf eine Bordsteinkante die Räder erst bei einer bestimmten Schrägstellung des Schiebewagens auf den Boden aufgreifen. Es ist aber auch möglich, die Radlager an den Stützen 22 so anzuordnen, daß die Laufflächen der Räder 26 stets, wie auch die Hinterräder 9, auf dem Boden, auf dem der Schiebewagen geschoben wird, abrollen. Sie bilden dann praktisch Tandemräder zu den hinteren Rädern. Im Falle des gewollten Aufkippens bei starrer Befestigung des Tragrahmens 11 an dem Gestell 1 werden die Stützen 22 nach vorne mit einem Fuß verschwenkt. Im Falle, daß eine gelenkige Anbindung des Tragrahmens 11 an dem Wagengestell 1 des Schiebewagens gegeben ist, wird beim Aufkippen durch die an dem Tragrahmen 11 vorgesehenen Räder 26 der Tragrahmen 11 um seine Schwenkachse, entsprechend dem Kippwinkel, nach oben gedrückt. In diesem Fall muss der Schwenkwinkel eingeschränkt werden. Dadurch würde ein in dem Sitzeinsatz 12 sitzendes Kind zwar geringfügig nach oben bewegt werden, was aber hinnehmbar ist, da ohnehin bis zu den Schrägholmen 2 ein ausreichender Abstand gegeben ist. Die Anbringung der Räder 26 hat den Vorteil, daß die Zusatzeinrichtung praktisch auch mitlaufend ausgeführt ist und mit Gewichten höchstbelastbar ist, ohne daß die Schwerpunktlage des Schiebewagens sich dadurch verändert. Ist die Stütze 22 angelenkt, so empfiehlt es sich, diese federbelastet auszuführen, so daß sie automatisch von der Feder nach hinten ausgeschwenkt und aufgestellt wird. In der Endposition greift sie an einen festen Anschlag an einem Schenkel oder einen Verbindungsteil zwischen den Schenkeln des Tragrahmens. Eine solche Stütze kann aber auch in Fahrtrichtung nach vorne verschwenkt werden, z. B. bei paariger Anordnung von zwei Stützen 22 durch Ausübung einer Fußtretkraft auf eine Verbindungsstange zwischen den Stützen 22. Kommen dabei die Stützen 22 zur Anlage an eine, die hinteren Räder 9 verbindende Achse oder einen Verbindungsteil oder Anschlag zwischen den Stützstreben 4, so wird ein Aufkippen des Vorderteils des Schiebewagens durch die Fußtretkraft begünstigt, z. B. beim Aufheben auf einen Bürgersteig. Wird der Schiebewagen rückwärts von einem erhöhten Bürgersteig heruntergezogen, so behindern die Stützen diese Bewegung nicht, sie schwenken dann automatisch nach vorne.

Das Ausführungsbeispiel in FIG 2 unterscheidet sich von dem in FIG 1 dadurch, daß der Tragrahmen 11 hier nicht an den Stützstreben befestigt ist, sondern - wie die Darstellung zeigt - an den Holmen des oberen Rahmens 18 eines Ablagekorbes 17 aus einem flexiblen Netz. Der Rahmen 18 ist verbindend zwischen den Schrägholmen 2 und den Stützstreben 4 vorgesehen. Um ein Zusammenlegen des Korbes zu ermöglichen, sind die beiden oberen Holme des Rahmens getrennt und über ein Schwenkgelenk 24 miteinander verbunden, so daß sich bei einem Hochdrücken des Schwenkgelenkes der hintere Abschnitt des Holmes des Rahmens 18 gegenüber dem vorderen Abschnitt dreieckförmig auf diesen zubewegt. Im Ausführungsbeispiel ist vorgesehen, daß an dem Schwenkgelenk 24 ein Befestigungsansatz mit einer Öffnung vorgesehen ist. In diese Öffnung kann das jeweilige Ende des Schenkels 14 des Tragrahmens 11 hineingesteckt werden. Bei entsprechender Ausbildung des Schwenkgelenkes kann darüber hinaus zugleich auch eine Verschwenksicherung durch das Ende des Schenkels 14 bewirkt werden. Zusätzlich ist an dem waagrechten Abschnitt des jeweiligen Schenkels eine Befestigungseinrichtung 21, z. B. ein Klipphalter, vorgesehen, so daß der Tragrahmen fest an den seitlichen Holmen 18 des Rahmens des Korbes befestigt ist. Der Tragrahmen 11 ist darüber hinaus stufenförmig ausgebildet, wie die Abbildung zeigt. Der als Funktionseinsatz 12 vorgesehene Sitzeinsatz ist somit gegenüber dem Ablagekorb 17 erhöht. Die Sitzfläche 23 kann mit der Oberkante des hinteren Querholms des Rahmens 18 des Ablagekorbes 17 abschließen oder auf diesem aufliegen, so daß in allen Ausführungen der Ablagekorb 17 zugleich als Fußschutz für ein Kleinkind verwendet werden kann, das in den Sitzeinsatz hineingesetzt wird.

Die Funktion ist auch bei der Ausführung realisierbar, wenn der Schiebewagen einen Ablagekorb 17 (Fig. 2) aufweist, wodurch verhindert wird, daß das hinten sitzende Kleinkind mit den Füßen auf den Boden gelangen kann oder daß beim Schieben die Füße des Kleinkindes unter die Achse gezogen werden können.

In FIG 2 ist ebenfalls eine Stütze 22 eingezeichnet. Diese ist schwenkbeweglich an der Stützstrebe 4 des Wagengestells 1 mittels eines Gelenkes 28 angelenkt. Dieses Gelenk 28 ist so ausgebildet, daß entsprechend dem eingezeichneten Pfeil 27 die Stützstrebe 22 um ein geringes Maß gegen die Kraft einer Feder auch nach oben verschwenkbar ist, beispielsweise wenn der Schiebewagen auf einen erhöhten Bürgersteig aufgefahren werden soll. In jedem Fall ist sie gegen die Kraft einer nicht dargestellten Feder in Richtung der Achse der hinteren Räder verschwenkbar. Beim Verschwenken der Stütze 22 geringfügig nach oben, kommt ihr nur eine Stützfunktion, nicht aber die Drehmomentfunktion zu, um den gesamten Kinderwagen um die Achse des Stützrades 26 zu verschwenken. Dieses Beispiel zeigt, daß auch nach Abnahme der Zusatzeinrichtung die Stützfunktion und damit die Kippsicherungsfunktion durch die zusätzliche Stütze 22 mit ihrem Rad 26 erfüllt wird. Gleiches ist auch gewährleistet, wenn kein Rad vorhanden ist.

In FIG 3 ist ein weiteres Ausführungsbeispiel dargestellt, bei dem an den Schrägholmen 4 Befestigungseinrichtungen, z. B. Aufnahmehülsen, ortsfest vorgesehen sind, z. B. angeschweißt sind. In die Öffnungen der Hülsen können die freien Enden des Tragrahmens, der in diesem Fall ebenfalls hinten stufenförmig ausgebildet ist, hineingesteckt und beispielsweise durch federnde Sicherungsbolzen darin gesichert werden. Auch diesem Beispiel ist ersichtlich, daß der Funktionseinsatz 12, der eine Sitzeinrichtung für ein zweites Kind ist, gesichert gehalten werden kann. Wird er nicht benötigt, so kann er aus den hülsenförmigen Befestigungseinrichtungen 16 herausgezogen werden, nachdem die Sicherungselemente geöffnet sind. Die Befestigungseinrichtung kann auch nachträglich montiert werden. Auch dieses Ausführungsbeispiel zeigt, daß der Funktionseinsatz 12 gegenüber dem eingezeichneten Korb 17 erhöht angeordnet ist, so daß auch hier die Füße des Kindes in den Korb hineingestellt werden können und so ein Fußschutz gewährleistet ist.

### Bezugszeichenliste

- 1: Wagengestell Befestigungseinrichtungen
- 2: Schrägholme
- 3: Schiebebügel
- 4: Stützstreben
- 5: Sitzelement
- 6: Sitzteil Befestigungseinrichtungen
- 7: Rückenteil
- 8: Lagervorrichtung
- 9: hintere Räder
- 10: vorderes Rad
- 11: Tragrahmen
- 12: Funktionseinsatz
- 13: Abschnitt
- 14: weitere Abschnitte
- 15: Befestigungseinrichtungen
- 16 17: Ablagekorb
- 18: Rahmen
- 19: Gurte
- 20: Führungen
- 21 22: Stützen
- 23: Sitzfläche
- 24: Schwenkgelenk
- 25: Halter
- 26: Rad
- 27: Pfeil
- 28: Gelenk
- 29: Feder

## Patentansprüche

1. Schiebewagen für Kinder und/oder Puppen, mit einem Wagengestell (1), einem Sitz- oder Liegeelement, mindestens einem Schieber mit einem Schiebegriff oder einem Schiebebügel (3), Lager (8) für hintere seitliche Räder und mindestens ein Lager für mindestens ein vorderes Rad (10), **dadurch gekennzeichnet, daß** an einem Teil des Wagengestells (1) mindestens eine sich schräg nach hinten und unten erstreckende, die Achsen der hinteren Räder (9) rückseitig überstehende Stütze (22) angelenkt ist, die gegen die Kraft einer Feder in Fahrtrichtung nach vorn in Richtung der Achsen der hinteren Räder verschwenkbar ist und bei Nichtausübung einer Schwenkkraft in die Aufstellposition zurückschwenkt und in einem bestimmten Abstand über den Boden endet.

2. Schiebenwagen nach Anspruch 1, **dadurch gekennzeichnet, daß** die Stütze (22) ein Sicherungsbügel ist, dessen seitlichen Stege an Fixpunkten des Wagengestells (1) angelenkt sind und dessen unterer Querverbindungsteil sich über einen bestimmten Abschnitt der Breite des Schiebewagens erstreckt.

3. Schiebenwagen nach Anspruch 1 oder 2, **dadurch gekennzeichnet, daß** an dem unteren Ende der Stütze (22) Räder achsparallel zu den hinteren Rädern (9) verlaufend vorgesehen sind, deren Rollflächen beabstandet zum Boden verlaufen oder auf dem Boden stets aufstehen.

4. Schiebenwagen nach einem der vorhergehenden Ansprüche, **dadurch gekennzeichnet, dass** Arretierungseinrichtungen am Wagengestell vorgesehen sind, die die Stütze (22) in der vorderen Schwenkposition arretiert.

5. Schiebenwagen nach einem der vorhergehenden Ansprüche, **dadurch gekennzeichnet, daß** die Stütze (22) um ein bestimmtes Winkelmaß gegen die Kraft einer Feder in Längsrichtung des Schiebewagens über die normale Aufstellposition nach hinten ausschwenkbar sind.

6. Schiebenwagen nach einem der vorhergehenden Ansprüche, **dadurch gekennzeichnet, daß** er eine Zusatzeinrichtung für einen Funktionseinsatz (12) aufweist, welche Zusatzeinrichtung an dem Wagengestell (1) fest, lösbar und/oder verschwenkbar, die Achse der hinteren Räder (9) nach hinten überstehend, unterhalb des Schiebers bzw. des Schiebegriffs oder des Schiebebügels befestigt ist.

7. Schiebewagen nach Anspruch 6 in Verbindung mit einem der Ansprüche 1 bis 5, **dadurch gekennzeichnet, dass** die Stütze (22) oder zwei parallele Stützen seitlich an der Zusatzeinrichtung befestigt sind.

8. Schiebewagen nach Anspruch 6 oder 7, **dadurch gekennzeichnet, dass** die Zusatzeinrichtung einen Tragrahmen (11), vorzugsweise einen Bügelrahmen aufweist, dessen beide Schenkel im Bereich des Querverbindungsteils über einen bestimmten Abschnitt (13) im wesentlichen parallel zum Aufstellboden des Schiebewagens verlaufen und deren weitere Abschnitte (14) geradlinig oder stufenförmig abgesetzt ausgebildet sind oder im wesentlichen schräg nach unten verlaufen, und daß am Wagengestell (1) Befestigungseinrichtungen (15, 16, 21) für die Befestigung mindestens der freien Enden der Schenkel (14) des Tragrahmens (11) vorgesehen sind.

9. Schiebewagen nach Anspruch 1, 6, 7 oder 8, **dadurch gekennzeichnet, daß** unterhalb des Sitz- und/oder Liegeelementes (5) eine Fußstütze für ein in der Zusatzeinrichtung sitzendes Kind und/oder ein Ablagekorb (17) mit einem stabilen oberen Rahmen (18) oder mindestens stabilen Seitenwänden vorgesehen ist.

10. Schiebewagen nach Anspruch 9, **dadurch gekennzeichnet, daß** an dem Rahmen (18) oder an den Seitenwänden des Ablagekorbes (17) die Schenkel (14) des Tragrahmens (11) mit mindestens den freien Endabschnitten befestigt sind (FIG 2).

11. Schiebewagen nach Anspruch 8, **dadurch gekennzeichnet, dass** der Schiebewagen aufweist:
- zwei im wesentlichen parallel von vorn nach hinten ansteigend verlaufenden, durchgehende oder aus miteinander verbundenen Abschnitten gebildete Schrägholme (2), die an ihren oberen Enden
Schiebegriffe oder einen verbindenden Schiebebügel (3),
- zwei hintere Stützstreben (4), die an den Schrägholmen (2) starr oder verschwenkbar befestigt sind und mit diesen ein Dreieck bilden,
- ein Sitzelement (5) aus einem Sitz- (6) und einem Rückenteil (7), die zwischen den Schrägholmen (2) angeordnet und an diesen befestigt sind,
- hintere Lagervorrichtungen (8) an den hinteren Stützstreben (4) oder an einem Verbindungsteil derselben für hintere Räder (9), und
- an den Stützstreben (4) Schwenklager als Befestigungseinrichtungen (15) für die freien Enden der Schenkel (14) des Tragrahmens (11), der aus einer aufgestellten Position in eine horizontale Gebrauchsposition verstellbar ist.

12. Schiebewagen nach Anspruch 11, **dadurch gekennzeichnet, daß** in Verlängerung des oberen Abschnittes (13) des Tragrahmens (11) an mindestens einem der Schenkel (14) starre Fixierelemente oder flexible Befestigungselemente, insbesondere Gurte (19), zur Lagesicherung des Trägerrahmens an den Stützstreben (4) in der horizontalen Gebrauchsposition vorgesehen sind.

13. Schiebewagen nach Anspruch 9 oder 10, **dadurch gekennzeichnet, daß** an den Schenkeln (14) als Befestigungseinrichtungen (21) Klipphalter aus federnden Seitenwänden vorgesehen sind, die auf die Wände bzw. die Rahmenholme (18) des Ablagekorbes (17) aufdrückbar sind.

14. Schiebewagen nach Anspruch 9, 10 oder 13, **dadurch gekennzeichnet, daß** die Rahmenholme (18) des Ablagekorbes (17) zum Zusammenklappen des Wagengestells unterteilt und mittels eines Schwenkgelenkes (24) miteinander verbunden sind und daß an dem Schwenkgelenk (24) eine Einstecköffnung für die Aufnahme eines Schenkelendes des Tragrahmens (11) vorgesehen ist und daß an dem jeweiligen Schenkel mindestens ein arretierendes Teil nach unten vorstehend oder ein Klipphalter vorgesehen ist, der vor einem Querbügel des Korbrahmens (18) nach hinten abzugssichernd eingreift.

15. Schiebewagen nach Anspruch 6, **dadurch gekennzeichnet, daß** der Funktionseinsatz ein Sitzeinsatz für ein Kind und/oder eine Puppe ist, der an dem hinteren Abschnitt (13) des Tragrahmens (11) befestigt ist.

16. Schiebewagen nach Anspruch 6, **dadurch gekennzeichnet, daß** der Funktionseinsatz (12) ein zusätzlicher Korb ist.

17. Schiebewagen nach Anspruch 6 oder 9, **dadurch gekennzeichnet, daß** der Funktionseinsatz (12) eine Stellfläche ist, auf die sich ein Kind aufstellen kann.

18. Schiebewagen nach Anspruch 15, **dadurch gekennzeichnet, daß** der Sitzeinsatz des Funktionseinsatzes (12) mit dem Rückenlehnenteil fest an dem Querbügel des Tragrahmens (11) und die Seitenwände an den beiden im wesentlichen waagrechten Abschnitten (13) der Schenkel des Tragrahmens (11) befestigt sind und daß die Rückenwand und die Seitenwände aus flexiblem, gepolstertem Material bestehen und daß die verbindende Sitzfläche (23) im wesentlichen stabil ausgebildet ist.

19. Schiebewagen nach Anspruch 18, **dadurch gekennzeichnet, daß** der Sitzeinsatz oberhalb des Tragbügels hinaus vorstehende Seiten- und Rückwandelemente aufweist, die einen seitlichen und rückwärtigen Schutz des in der Zusatzeinrichtung sitzenden Kindes bzw. der Puppe bilden.

20. Schiebewagen nach einem der vorhergehenden Ansprüche, **dadurch gekennzeichnet, dass** die Zusatzeinrichtung, die Stützen (22) und die daran befestigbaren Räder (26) als Zusatzeinrichtungen einzeln oder in ihrer Gesamtheit konzipiert sind und nachträglich an einem bestehenden Schiebewagen montierbar sind.
